# EUROPÄISCHE PATENTSCHRIFT

(11) **EP 0 685 409 B1**
(45) Veröffentlichungstag und Bekanntmachung des Hinweises auf die Patenterteilung: **14.01.1998**
(21) Anmeldenummer: 95106959.0
(22) Anmeldetag: 09.05.1995
(51) Int. Cl.: B65D 85/10, B65D 5/54

(54) **Gebindepackung für Zigaretten-Packungen**
Wrapper for cigarette packs
Emballage pour paquets de cigarettes

(30) Priorität: 31.05.1994 DE 4418821
(43) Veröffentlichungstag der Anmeldung: 06.12.1995
(73) Patentinhaber: Focke & Co. (GmbH & Co.), 27283 Verden (DE)
(72) Erfinder: Focke, Heinz, D-27283 Verden (DE); Buse, Henry, D-27374 Visselhövede (DE)
(74) Vertreter: Bolte, Erich, Dipl.-Ing.

(56) Entgegenhaltungen:
- FR-A- 2 342 208
- US-A- 1 772 625
- US-A- 4 932 534

## Beschreibung

Die Erfindung betrifft eine Gebindepackung für eine Gruppe von Zigaretten-Packungen - Zigaretten-Stange -, mit einer die Gruppe der Zigaretten-Packungen umgebenden Außenumhüllung aus dünnem Karton oder ähnlichem Verpackungsmaterial, mit Vorderwand, Rückwand, schmalen langen Seitenwänden und kleinen Stirnwänden.

Die Erfindung befaßt sich mit solchen Gebindepackungen, die aus dünnem Karton oder einem anderen faltbaren Material von gewisser Eigensteifigkeit bestehen. Bei den Zigaretten-Packungen handelt es sich vorzugsweise um die weltweit bekannten Weichbecher-Packungen.

Die "Zigaretten-Stange" hat üblicherweise einen Inhalt von zehn Zigaretten-Packungen. Bekannt sind aber auch teilbare Gebindepackungen, bei denen jedes Teilgebinde fünf nebeneinanderliegende Zigaretten-Packungen aufnimmt. Hieraus ergibt sich dann eine eigenständige Gebindepackung für fünf Zigaretten-Packungen (US 4,932,534).

Ebenso wie die zuvor genannte Schrift zeigt die US 1,772,625 einen nicht gattungsgemäßen Stand der Technik. Beschrieben ist eine Packung zur Aufnahme von Kleinteilen, wie etwa Bonbons oder Streichhölzer. Die Packung selbst ist durch entsprechend angeordnete Perforationslinien auf ein geringeres Volumen verkleinerbar.

Der Erfindung liegt die Aufgabe zugrunde, der Außenumhüllung einer "Zigaretten-Stange" eine weitere, zusätzliche Verwendungsmöglichkeit zu erschließen.

Zur Lösung dieser Aufgabe ist die erfindungsgemäße Gebindepackung dadurch gekennzeichnet, daß ein Teilbereich der Außenumhüllung durch Stanz- und/oder Perforationslinien vom übrigen Teil der Außenumhüllung, nämlich von einem Restgebinde abtrennbar ist, daß der abgetrennte Teilbereich zu einer wiederverschließbaren Schachtel faltbar ist, die hinsichtlich Breite, Tiefe und Höhe den Abmessungen einer einzelnen Zigaretten-Packung oder von zwei mit ihren großen Flächen - Vorderseite und Rückseite - aneinanderliegenden Zigaretten-Packungen entspricht, daß die Außenumhüllung durch Faltlinien, Stanzungen und/oder Perforationslinien begrenzte Schachtelwände bildet, nämlich mindestens eine Schachtel-Vorderwand, eine Schachtel-Rückwand, eine Schachtel-Bodenwand sowie aufrechte Schachtel-Seitenwände, wobei eine Oberwand der Zigaretten-Packung oder die Oberwände zweier Zigaretten-Packungen im Bereich der oberen langen Seitenwand - und damit der Schachtel-Bodenwand gegenüber - liegen, und daß zur Komplettierung der Schachtel Faltlappen vorgesehen sind, die zur Bildung der Schachtel-Seitenwand faltbar sind.

Nach dem Vorschlag der Erfindung wird demnach die Gebindepackung bei Ingebrauchnahme geteilt, derart, daß mindestens eine kleinformatige Schachtel aus dem Verpackungsmaterial der Außenumhüllung entsteht. Diese Schachtel ist so ausgebildet und gestaltet, daß sie eine einzelne Zigaretten-Packung - oder zwei aneinanderliegende Packungen - aufnehmen kann.

Dadurch ist die Schachtel besonders für die Aufnahme von Weichpackungen bzw. Weichbecher-Packungen geeignet. Dieser materialgünstige Packungstyp leidet unter dem Nachteil der geringen Formstabilität und der dadurch bestehenden Gefahr der unerwünschten Verformung der Zigaretten. Durch Verwendung der insbesondere aus dünnem Karton bestehenden, aus der Gebindepackung gebildeten Schachtel ergibt sich für die Weichpackung eine stabile Außenpackung. Diese ist für mehrmaligen Gebrauch geeignet, so daß nach und nach der gesamte Inhalt der Gebindepackung in die Schachtel als stabile Außenpackung eingesetzt werden kann.

Die Außenumhüllung der Gebindepackung bildet erfindungsgemäß mit einem Teil- bzw. Endbereich unmittelbar die Schachtel, insbesondere bei Gebindepackungen bzw. Teilgebinden mit einem im Querschnitt den Abmessungen einer Zigaretten-Packung entsprechenden Format. Für die Herstellung der Schachtel wird lediglich ein Endbereich des geschlossenen (Teil-)Gebindes abgetrennt. Es entstehen dadurch Faltlappen zur Bildung einer Seitenwand der Schachtel. Diese werden in die der Seitenwand entsprechende Position gefaltet und miteinander verbunden, vorzugsweise durch Stecklappen. Dadurch ist mit wenigen Handgriffen die exakt auf die Zigaretten-Packung zugeschnittene Schachtel gebildet.

Weitere Einzelheiten der Erfindung beziehen sich auf die Ausbildung der Außenumhüllung der Gebindepackung sowie auf die Gestaltung der daraus herzustellenden Schachtel. Ausführungsbeispiele der Erfindung werden nachfolgend anhand der Zeichnungen näher erläutert. Es zeigt:
- Fig. 1: ein (Teil-)Gebinde nach dem Abtrennen eines Teils für eine Schachtel in perspektivischer Darstellung,

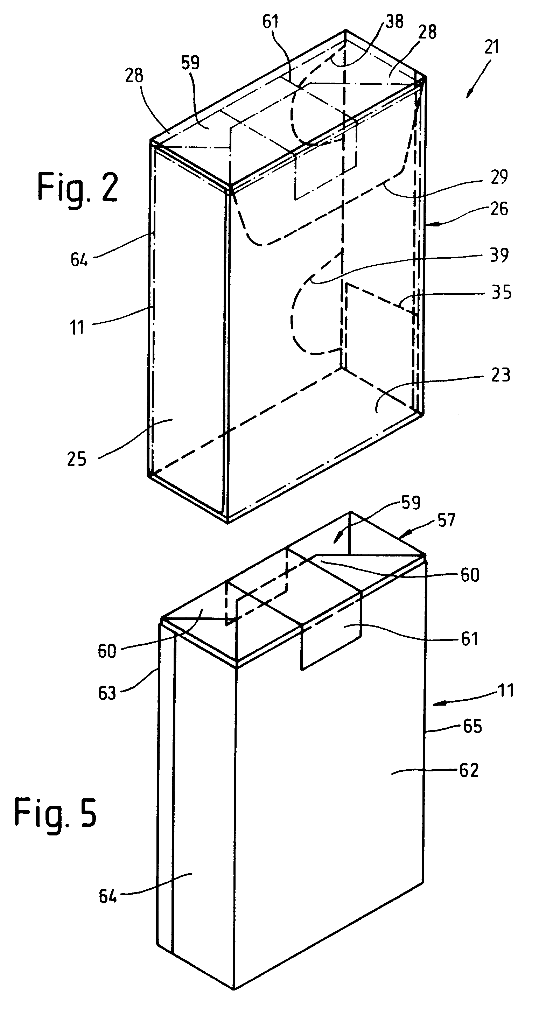

- Fig. 2: eine fertiggefaltete Schachtel mit einer Zigaretten-Packung, ebenfalls in perspektivischer Darstellung, bei vergrößertem Maßstab,
- Fig. 3: einen ausgebreiteten Zuschnitt für die Außenumhüllung eines Gebindes,

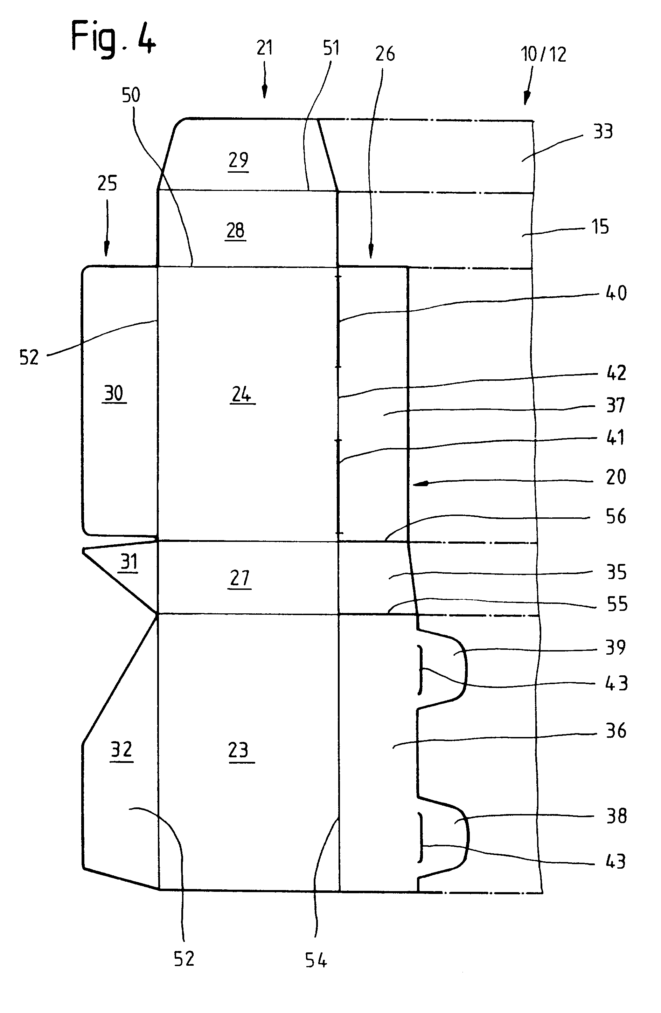

- Fig. 4: einen einzelnen Zuschnitt für eine Schachtel, in vergrößertem Maßstab,
- Fig. 5: eine Weichbecher-Packung für Zigaretten in perspektivischer Darstellung.

Die in den Zeichnungen dargestellten Ausführungsbeispiele beruhen auf einer Gebindepackung 10 für Zigaretten-Packungen 11. Bei diesen handelt es sich vorzugsweise um Weich- bzw. Weichbecher-Packungen, wie beispielsweise in Fig. 5 gezeigt. Dieser Packungstyp besteht üblicherweise aus einer Innenumhüllung 57 aus Stanniol oder Papier für eine Zigaretten-Gruppe sowie aus einem oben offenen Becher 58 aus Papier. Dadurch ist dieser Packungstyp von geringer Formstabilität. Innenumhüllung 57 mit Zigaretten-Gruppe - ein Zigaretten-Block - ragt oben geringfügig aus dem Becher 58 heraus. Die Innenumhüllung 57 bildet eine Oberwand 59 aus einander teilweise überdeckenden Faltlappen 60 der Innenumhüllung 57. Die üblicherweise nicht durch Klebung miteinander verbundenen Faltlappen 60 werden durch eine sich quer über die Stirnfläche bzw. Oberwand 59 erstreckende Banderole 61 in Schließstellung gehalten. Die Oberwand 59 wird üblicherweise als Entnahmeöffnung benutzt, indem für die Ingebrauchnahme der Zigaretten-Packung 11 Teile der Faltlappen 60 abgetrennt werden.

Die in Fig. 5 beispielshaft dargestellte Zigaretten-Packung 11 ist quaderförmig ausgebildet mit einer großflächigen Vorderseite 62 und entsprechender Rückseite 63. Einander gegenüberliegende Seitenflächen 64, 65 sind entsprechend der Breite der Zigaretten-Gruppe schmal.

Die Gebindepackung 10 erhält eine Mehrzahl von derartigen oder ähnlichen Zigaretten-Packungen 11, nämlich entweder fünf oder zehn Zigaretten-Packungen 11. Diese sind von einer Außenumhüllung 12 aus faltbarem Material von gewisser Formfestigkeit umgeben. Insbesondere besteht die Außenumhüllung 12 aus dünnem Karton.

Die Gebindepackung 10 ist im vorliegenden Fall so gestaltet, daß sie die Gruppe der Zigaretten-Packungen 11 allseitig umgibt. Die Gebindepackung 10 bzw. deren Außenumhüllung 12 bilden demnach Vorderwand 13 und Rückwand 14 in rechteckiger Ausführung, weiterhin schmale, langgestreckte Seitenwände 15, 16 sowie relativ kleine, einander gegenüberliegende Stirnwände 17 und 18.

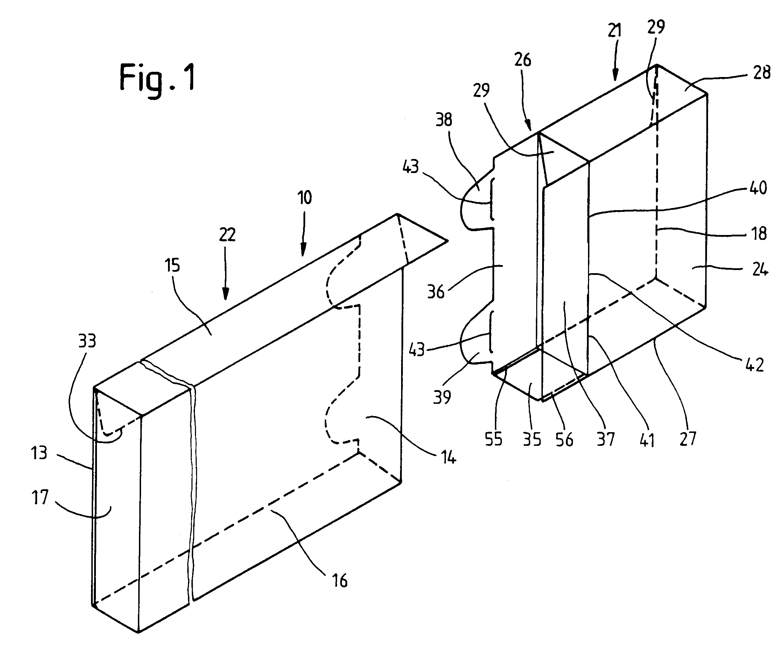

Bei dem Ausführungsbeispiel gemäß Fig. 1 dient die Gebindepackung 10 zur Aufnahme von fünf nebeneinander angeordneten Zigaretten-Packungen 11. Die Länge der Vorderwand 13 und Rückwand 14 sowie der Seitenwände 15, 16 entspricht demnach der Abmessung von fünf mit ihren aufrechten, schmalen Seitenflächen 64, 65 nebeneinander positionierten Zigaretten-Packungen 11. Diese sind innerhalb der Gebindepackung 10 so angeordnet, daß Öffnungsseiten, nämlich die Oberwände 59, die durch die Innenumhüllung 57 aus Stanniol oder Papier gebildet sind, der in Fig. 1 oberen Seitenwand 15 der Außenumhüllung 12 zugekehrt sind.

Eine Besonderheit besteht darin, daß aufgrund geeigneter Gestaltung der Außenumhüllung 12, nämlich durch Anbringen einer Perforationslinie 20, ein Teilstück der Gebindepackung 10, nämlich eine Schachtel 21, von einem verbleibenden Restgebinde 22 abtrennbar ist. Die Trennung erfolgt aufgrund entsprechender Ausbildung und Anordnung der Perforationslinie 20 im Bereich der geschlossenen bzw. fertigen Gebindepackung 10 derart, daß die vom Restgebinde 22 abgetrennte Schachtel 21 den Abmessungen einer Zigaretten-Packung 11 entspricht. Zusätzlich werden aus dem Bereich des Restgebindes 22 Faltlappen abgetrennt, die der Komplettierung der Schachtel 21 dienen, nämlich zum Schließen einer offenen Seite derselben.

Die durch Abtrennen von der Gebindepackung 10 gebildete Schachtel 21 dient als Außenumhüllung der Zigaretten-Packung 11 bis zu deren Verbrauch. Die Schachtel 21 soll dabei für mehrere bzw. für alle Zigaretten-Packungen 11 des Gebindes als stabilisierende und schützende Außenumhüllung dienen.

Die Schachtel 21 bildet im vorliegenden Fall eine allseitige Umhüllung der Zigaretten-Packung 11, also mit Schachtel-Vorderwand 23, Schachtel-Rückwand 24, Schachtel-Seitenwänden 25, 26 und einer Bodenwand 27. An der Oberseite ist eine Schließwand 28 mit Stecklasche 29 vorgesehen. Diese ermöglichen das mehrmalige Öffnen und Wiederverschließen der Schachtel 21 zur Entnahme von Zigaretten. Die Stecklasche 29 wird dabei zwischen Zigaretten-Packung 11 und Schachtel-Vorderwand 23 eingeschoben. Schließwand 28 und Stecklasche 29 sind mit der Schachtel-Rückwand 24 verbunden.

Eine Schachtel-Seitenwand 25 entspricht einer Stirnwand 18 der Gebindepackung 10. Diese Stirnwand 18 bzw. Schachtel-Seitenwand 25 besteht aus Stirnwandlappen 30, 31 und 32 in bekannter Ausbildung, nämlich mit rechteckigem äußeren Stirnwandlappen 30, mit etwa dreieckförmigem kleinen inneren Stirnwandlappen 31 und mit dem trapezförmigen inneren Stirnwandlappen 32. Die Bodenwand 27 der Schachtel 21 entspricht der (unteren) Seitenwand 16 der Gebindepackung 10. Diese Seitenwand 16 ist innerhalb des Zuschnitts für die Außenumhüllung 12 zwischen Vorderwand 13 und Rückwand 14 angeordnet. Schließwand 28 und Stecklasche 29 der Schachtel 21 sind Teile entsprechender Elemente der Gebindepackung 10, nämlich der Seitenwand 15 mit einem an dieser angeordneten Schließstreifen 33.

Zur Bildung der dem Restgebinde 22 zugekehrten Schachtel-Seitenwand 26 dienen mitabgetrennte Faltlappen, nämlich einmal ein unterer Ecklappen 35 als Teil der Seitenwand 16 der Gebindepackung 10. Des weiteren sind Seitenlappen 36 und 37 gebildet. Bei diesen handelt es sich um Teile der Vorderwand 13 und Rückwand 14 der Gebindepackung 10. Der Seitenlappen 36 liegt außen und dient als äußere Abdeckung der Schachtel-Seitenwand 26. Zur Vollendung der von der Gebindepackung 10 abgetrennten Schachtel 21 wird demnach zuerst der Ecklappen 35 in eine aufrechte Position (Fig. 1), danach der Seitenlappen 37 und schließlich der Seitenlappen 36 um jeweils 90° gefaltet.

Die beiden Seitenlappen 36, 37 können miteinander verbunden sein, zum Beispiel durch aktivierbare Klebestellen (nicht gezeigt). Im vorliegenden Fall ist als Lösung eine Steckverbindung gewählt. Zu diesem Zweck sind an einem freien Längsrand des äußeren Seitenlappens 36 Steckzungen 38, 39 angeordnet. Diese werden bei der Komplettierung der Schachtel 21 abgewinkelt und in Schlitze 40, 41 eingeführt. Diese sind im Bereich einer aufrechten Schachtelkante 42 gebildet zwischen der Schachtel-Rückwand 24 und dem anschließenden Seitenlappen 37. Die Schlitze 40, 41 sind so bemessen, daß die bogenförmig konturierten Steckzungen 38, 39 in die Schlitzen 40, 41 eintreten können. Die Steckzungen 38, 39 werden dabei vorzugsweise um 90° umgefaltet, so daß sie an der Innenseite der Schachtel-Rückwand 24 anliegen.

Die Steckzungen 38, 39 werden durch die entsprechend geformte Perforationslinie 20 aus der Vorderwand 13 der Gebindepackung 10 gebildet. Im Bereich jeder Steckzunge 38, 39 ist im vorliegenden Fall eine Stanzung 43 angebracht. Die Stanzung 43 erleichtert die bei der Herstellung der Schachtel 21 erforderliche Faltung der Steckzungen 38, 39. Durch die U-förmige Ausbildung der Stanzung 43 wird außerdem ein Anschlag für eine exakte Positionierung der Steckzungen 38, 39 in den Schlitzen 40, 41 geschaffen.

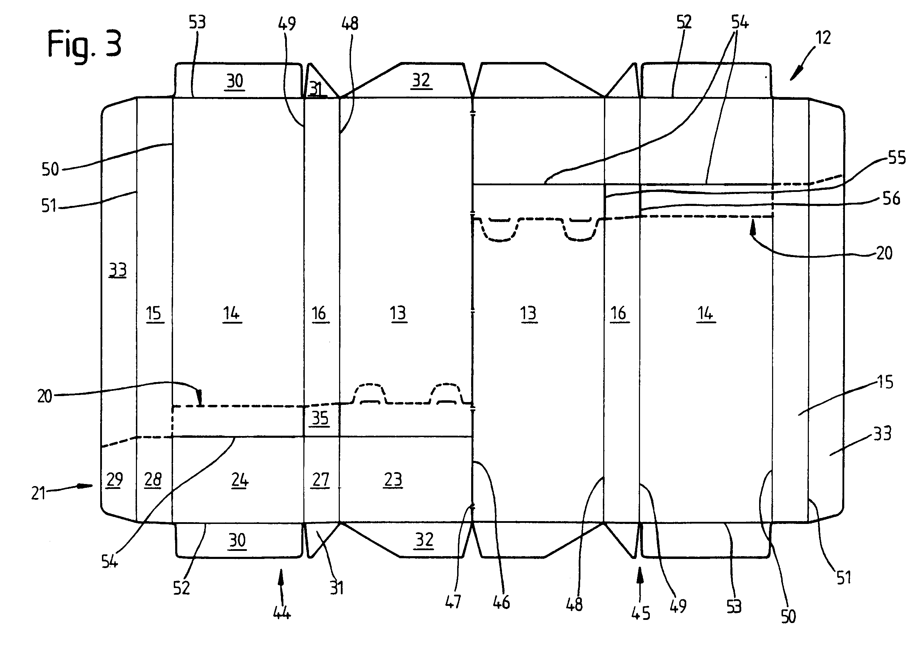

Die Gebindepackung 10 gemäß Fig. 1 kann ein Teilgebinde sein. Diese Alternative ist in Fig. 3 gezeigt. Ein hier einstückiger Zuschnitt für die Außenumhüllung 12 ist so ausgebildet, daß zwei Teilgebinde 44, 45 herstellbar sind, die zunächst eine Einheit bilden, aber für die Ingebrauchnahme oder bereits vorher trennbar sind. Jedes Teilgebinde 44, 45 hat dann die Größe und Gestalt der Gebindepackung 10 gemäß Fig. 1.

Die Teilgebinde 44, 45 sind im Bereich einer gestanzten Trennlinie 46 miteinander verbunden. Diese besteht aus Stanzungen, die durch Restverbindungen 47 unterbrochen sind. Die stegförmigen Restverbindungen 47 werden zum Trennen der Teilgebinde 44, 45 zerstört, nämlich durchtrennt.

Der Zuschnitt für die Außenumhüllung 12 ist für jedes Teilgebinde 44, 45 durch Längsfaltlinien 48, 49, 50, 51 in langgestreckte Felder zur Bildung von Wandungen der Gebindepackung 10 bzw. der Teilgebinde 44, 45 vorgeformt. Die Längsfaltlinien 49, 50 begrenzen die untere Seitenwand 16 der Gebindepackung 10 zwischen Vorderwand 13 und Rückwand 14. Die Längsfaltlinien 50, 51 begrenzen die obere Seitenwand 15, an die der Schließstreifen 33 anschließt. Die Längsfaltlinien 48..51 bilden entsprechende quergerichtete Kanten der Schachtel 21 nach Abtrennen von der Gebindepackung 10.

Querfaltlinien 52, 53 grenzen Vorderwand 13, Rückwand 14 und Seitenwand 16 gegenüber den Stirnwandlappen 30, 31, 32 ab. Die Querfaltlinie 52 bildet aufrechte vordere und rückseitige Schachtelkanten parallel zur Schachtelkante 42. Diese wird durch eine weitere Querfaltlinie 54 im Bereich des Zuschnitts für die Gebindepackung 10 bzw. Teilgebinde 44, 45 ebenfalls vorgeformt.

Jeder Zuschnitt für ein Teilgebinde 44, 45 ist mit einer Perforationslinie 20 zum Begrenzen eines Bereichs für eine Schachtel 21 versehen. Von jedem gefalteten Teilgebinde 44, 45 kann demnach eine Schachtel 21 in der beschriebenen Weise abgetrennt und durch Faltvorgänge komplettiert werden. Die Schachteln 21 bzw. die hierfür markierten Bereiche der Außenumhüllung 12 sind bei dem Beispiel der Fig. 3 einander diametral gegenüberliegend positioniert. Von jedem der Teilgebinde 44, 45 kann eine Schachtel 21 - samt Inhalt - in der beschriebenen Weise abgetrennt werden.

Die durchgehende, ununterbrochene Perforationslinie 20 entspricht der Kontur eines Zuschnitts für die Schachtel 21. Sie erstreckt sich demnach vom freien Rand des Schließstreifens 33 bis zur Trennlinie 46, also über die volle Breite des Zuschnitts eines Teilgebindes 44, 45.

Zusätzlich werden bei dem vorliegenden Ausführungsbeispiel zwei parallele Stanzschnitte 55, 56 angebracht. Diese teilen den unteren Ecklappen 35 der Schachtel 21 von den benachbarten Seitenlappen 36, 37 ab. Die Stanzschnitte 55, 56 können mit der Perforationslinie 20 in einem Arbeitstakt hergestellt werden. Des weiteren können bei demselben Arbeitstakt die Schlitze 40, 41 durch Stanzung gebildet werden. Der äußere Seitenlappen 36 hat im vorliegenden Fall eine etwas größere Breite als der innere Seitenlappen 36 durch entsprechenden Verlauf der Perforationslinie 20.

Die Handhabung der Schachtel 21 nach dem Abtrennen und Komplettieren ist derart, daß bei abgehobener Schließwand 28 (mit Stecklasche 29) der Zugang zur Oberwand 59 der Zigaretten-Packung 11 frei ist. Aus einer durch Abtrennen von Teilen der Faltlappen 60 gebildeten ständigen Öffnung können dann die Zigaretten entnommen werden. Bei geschlossener Schachtel 21 wird die Öffnung in der Oberwand 59 überdeckt, so daß die Zigaretten-Packung 11 durch die Schließwand 28 geschlossen wird.

Die Gebindepackung 10 kann alternativ so gestaltet sein, daß beispielsweise zwei nebeneinanderliegende Zigaretten-Packungen 11 mit einer entsprechend dimensionierten Schachtel von der Gebindepackung abgetrennt werden. Die beiden Zigaretten-Packungen können dabei mit ihren großen Flächen, also mit Vorderseite 62 und Rückseite 63, aneinander liegen.

## Patentansprüche

1. Gebindepackung für eine Gruppe von Zigaretten-Packungen (11), sogenannte "Zigaretten-Stange", mit einer die Gruppe der Zigaretten-Packungen (11) umgebenden Außenumhüllung (12) aus dünnem Karton oder ähnlichem Verpackungsmaterial, mit Vorderwand (13), Rückwand (14), schmalen langen Seitenwänden (15, 16) und kleinen Stirnwänden (17, 18), **dadurch gekennzeichnet,** daß ein Teilbereich der Außenumhüllung (12) durch Stanz- und/oder Perforationslinien (20) vom übrigen Teil der Außenumhüllung (12), nämlich von einem Restgebinde (22) abtrennbar ist, daß der abgetrennte Teilbereich zu einer wiederverschließbaren Schachtel (21) faltbar ist, die hinsichtlich Breite, Tiefe und Höhe der Abmessungen einer einzelnen Zigaretten-Packung (11) oder von zwei mit ihren großen Flächen - Vorderseite (62) und Rückseite (63) - aneinanderliegenden Zigaretten-Packungen (11) entspricht, daß die Außenumhüllung (12) durch Faltlinien, Stanzungen und/oder Perforationslinien (20) begrenzte Schachtelwände bildet, nämlich mindestens eine Schachte-Vorderwand (23), eine Schachtel-Rückwand (24), eine Schachtel-Bodenwand (27) sowie aufrechte Schachtel-Seitenwände (25, 26), wobei eine Oberwand (59) der Zigaretten-Packung (11) oder die Oberwände (59) zweier Zigaretten-Packungen (11) im Bereich der oberen langen Seitenwand (15) - und damit der Schachtel-Bodenwand (27) gegenüber - liegen und daß zur Komplettierung der Schachtel (21) Faltlappen (36, 37, 35, 29) vorgesehen sind, die zur Bildung der Schachtel-Seitenwand (26) faltbar sind.

2. Gebindepackung nach Anspruch 1, dadurch gekennzeichnet, daß die Außenumhüllung (12) durch Faltlinien, Stanzungen und/oder Perforationslinien (20) begrenzte Schließlappen bildet, nämlich eine Schließwand (28) und vorzugsweise eine Stecklasche (29) im Bereich einer stirnseitigen Öffnung (Oberwand 59) der Schachtel (21).

3. Gebindepackung nach Anspruch 1 oder 2, dadurch gekennzeichnet, daß die vom Restgebinde (22) abgetrennte Schachtel (21) durch Stecklappen bzw. Steckzungen (38, 39) zusammengehalten ist, mindestens im Bereich einer Schachtel-Seitenwand (26), vorzugsweise derart, daß an einem äußeren Seitenlappen (36) der Schachtel-Seitenwand (26) angebrachte Steckzungen (38, 39) in Schlitze (40, 41) eines anderen Wandungsteils der Schachtel eingeführt sind.

4. Gebindepackung nach Anspruch 3, dadurch gekennzeichnet, daß die Steckzungen (38, 39) des Seitenlappens (36) in Schlitze (40, 41) im Bereich einer aufrechten Schachtelkante (42) einführbar sind, derart, daß sich die Steckzungen (38, 39) innerhalb der Schachtel (21) zwischen einer Schachtelwand und der Zigaretten-Packung (11) erstrecken, insbesondere zwischen Schachtel-Rückwand (24) und Zigaretten-Packung (11).

5. Gebindepackung nach Anspruch 1 oder einem der weiteren Ansprüche, dadurch gekennzeichnet, daß die vom Restgebinde (22) abgetrennte Schachtel (21) hinsichtlich Breite, Tiefe und Höhe den Abmessungen einer einzelnen Zigaretten-Packung (11) entspricht, nämlich einer Weichbecher-Packung und mindestens einem Faltlappen, nämlich ein Seitenlappen (36), zur Bildung der Schachtel-Seitenwand (26) dient, wobei Teilbereiche von Vorderwand (13) und Rückwand (14) der Außenumhüllung (12) eine Schachtel-Vorderwand (23) bzw. eine Schachtel-Rückwand (24) und eine Stirnwand (18) der Außenumhüllung (12) eine Schachtel-Seitenwand (25) bilden.

6. Gebindepackung nach Anspruch 5, dadurch gekennzeichnet, daß Zigaretten-Packungen (11), nämlich Weichbecher-Packungen, mit ihrer Öffnungsseite - Oberwand (59) - im Bereich einer (oberen) langen Seitenwand (15) der Außenumhüllung (12) liegen und daß ein Teilbereich der Seitenwand (15) eine obere Schließwand (28) der Schachtel (21) mit Stecklasche (29) bildet.

7. Gebindepackung nach Anspruch 5, dadurch gekennzeichnet, daß von den Wandungen des Restgebindes (22) Seitenlappen (36, 37) im Bereich von Vorderwand (13) und Rückwand (14) sowie ein Ecklappen (35) im Bereich einer Seitenwand (16) abtrennbar sind.

8. Gebindepackung nach Anspruch 7, dadurch gekennzeichnet, daß der einer Bodenwand (27) der Schachtel (21) zugeordnete Ecklappen (35) durch Stanzschnitte (55, 56) von benachbarten Seitenlappen (36, 37) abgeteilt ist, wobei vorzugsweise die Stanzschnitte (55, 56) zugleich mit der Perforationslinie (20) herstellbar sind.

9. Gebindepackung nach Anspruch 1 oder einem der weiteren Ansprüche, dadurch gekennzeichnet, daß diese aus zwei im Bereich einer Trennlinie (46) trennbaren Teilgebinden (44, 45) besteht, wobei jedes Teilgebinde (44, 45) durch Stanz- und/oder Perforationslinien (20) abgeteilte Bereiche zur Bildung je einer Schachtel (21) aufweist, vorzugsweise an gegenüberliegenden Endbereichen jedes Teilgebindes (44, 45).

## Claims

1. Bundle pack for a group of cigarette packs (11), so-called "cigarette stick", with an outer wrapper (12) which encloses the group of the cigarette packs (11) and consists of thin cardboard or similar packaging material, having a front wall (13), rear wall (14), narrow long side walls (15, 16) and small end walls (17, 18), characterized in that a sub-region of the outer wrapper (12) can be severed, by punch and/or perforation lines (20), from the rest of the outer wrapper (12), namely from a residual bundle pack (22), in that the severed sub-region can be folded to give a re-closeable box (21) which, in terms of width, depth and height, corresponds to the dimensions of a single cigarette pack (11) or of two cigarette packs (11) resting one against the other by means of their large surfaces - front side (62) and rear side (63), in that the outer wrapper (12) forms box walls bounded by folding lines, punchings and/or perforation lines (20), namely at least one box front wall (23), a box rear wall (24), a box base wall (27) and upright box side walls (25, 26), an upper wall (59) of the cigarette pack (11), or the upper walls (59) of two cigarette packs (11), lying in the region of the upper long side wall (15) - and therefore opposite the box base wall (27), and in that, in order to complete the box (21), folding tabs (36, 37, 35, 29), which can be folded in order to form the box side wall (26), are provided.

2. Bundle pack according to Claim 1, characterized in that the outer wrapper (12) forms closure tabs bounded by folding lines, punchings and/or perforation lines (20), namely a closure wall (28) and preferably a push-in flap (29) in the region of an end-side opening (upper wall 59) of the box (21).

3. Bundle pack according to Claim 1 or 2, characterized in that the box (21) severed from the residual bundle pack (22) is held together by push-in tabs or push-in tongues (38, 39), at least in the region of a box side wall (26), preferably such that push-in tongues (38, 39) which are fitted on an outer side tab (36) of the box side wall (26) are introduced into slits (40, 41) of another wall part of the box.

4. Bundle pack according to Claim 3, characterized in that the push-in tongues (38, 39) of the side tab (36) can be introduced into slits (40, 41) in the region of an upright box edge (42) such that the push-in tongues (38, 39) extend, within the box (21), between a box wall and the cigarette pack (11), in particular between the box rear wall (24) and the cigarette pack (11).

5. Bundle pack according to Claim 1 or one of the other claims, characterized in that in terms of width, depth and height, the box (21) severed from the residual bundle pack (22) corresponds to the dimensions of a single cigarette pack (11), namely a soft-carton pack, and at least one folding tab, namely a side tab (36), serves to form the box side wall (26), sub-regions of the front wall (13) and rear wall (14) of the outer wrapper (12) forming a box front wall (23) and a box rear wall (24), and an end wall (18) of the outer wrapper (12) forming a box side wall (25).

6. Bundle pack according to Claim 5, characterized in that cigarette packs (11), namely soft-carton packs, lie with their opening side - upper wall (59) - in the region of an (upper) long side wall (15) of the outer wrapper (12), and in that a sub-region of the side wall (15) forms an upper closure wall (28) of the box (21) with push-in flap (29).

7. Bundle pack according to Claim 5, characterized in that, from the walls of the residual bundle pack (22), side tabs (36, 37) can be severed in the region of the front wall (13) and rear wall (14) and a corner tab (35) can be severed in the region of a side wall (16).

8. Bundle pack according to Claim 7, characterized in that the corner tab (35), assigned to a base wall (27) of the box (21), is divided off from adjacent side tabs (36, 37) by punch cuts (55, 56), it being possible preferably for the punch cuts (55, 56) to be produced at the same time as the perforation line (20).

9. Bundle pack according to Claim 1 or one of the other claims, characterized in that said bundle pack comprises two part-bundle packs (44, 45) which can be separated in the region of a separation line (46), each part-bundle pack (44, 45) exhibiting regions which are divided off by punch and/or perforation lines (20) and are intended to form in each case one box (21), preferably at opposite end regions of each part-bundle pack (44, 45).

## Revendications

1. Paquet de groupement pour un groupe de paquets de cigarettes (11), dit "cartouche de cigarettes", comportant une enveloppe extérieure (12) en carton mince ou matériau d'emballage semblable entourant le groupe de paquets de cigarettes (11) et ayant une paroi avant (13), une paroi arrière (14), des parois latérales longues étroites (15, 16) et des petites parois frontales (17, 18), caractérisé par le fait qu'une partie de l'enveloppe extérieure (12) peut être détachée de la partie restante, à savoir d'un groupement restant (22), par des lignes de découpage et/ou de perforations (20), que la partie détachée peut être pliée en une boîte refermable (21) qui correspond en largeur, profondeur et hauteur aux dimensions d'un seul paquet de cigarettes (11) ou de deux paquets de cigarettes (11) juxtaposés par leurs grandes faces (face avant 62 et face arrière 63), que l'enveloppe extérieure (12) forme, par des lignes de pliage, des découpures et/ou des lignes de perforations (20), des parois de boîte limitées, à savoir au moins une paroi avant de boîte (23), une paroi arrière de boîte (24), une paroi de fond de boîte (27) et des parois latérales de boîte verticales (25, 26), une paroi supérieure (59) du paquet de cigarettes (11) ou les parois supérieures (59) de deux paquets de cigarettes (11) étant situées dans la zone de la paroi latérale longue supérieure (15) (et ainsi en face de la paroi de fond de boîte (27)), et que pour l'achèvement de la boîte (21) sont prévues des pattes rabats (36, 37, 35, 29) qui peuvent être rabattues pour la formation de la paroi latérale de boîte (26).

2. Paquet de groupement selon la revendication 1, caractérisé par le fait que l'enveloppe extérieure (12) forme, par des lignes de pliage, des découpures et/ou des lignes de perforations (20), des pattes de fermeture limitées, à savoir une paroi de fermeture (28) et de préférence une patte à insertion (29) dans la zone d'une ouverture frontale (paroi supérieure 59) de la boîte (21).

3. Paquet de groupement selon l'une des revendications 1 et 2, caractérisé par le fait que la boîte (21) détachée du groupement restant (22) est connectée par des pattes à insertion ou des languettes à insertion (38, 39), au moins dans la zone d'une paroi latérale (26) de la boîte, de préférence de façon telle que des languettes à insertion (38, 39) faites sur une patte latérale extérieure (36) de la paroi latérale (26) de la boîte soient engagées dans des fentes (40, 41) d'une autre partie de paroi de la boîte.

4. Paquet de groupement selon la revendication 3, caractérisé par le fait que les languettes à insertion (38, 39) de la patte latérale (36) peuvent être engagées dans des fentes (40, 41) dans la zone d'une arête verticale (42) de la boîte de façon telle qu'elles s'étendent à l'intérieur de la boîte (21) entre une paroi de celle-ci et le paquet de cigarettes (11), en particulier entre la paroi arrière (24) de la boîte et le paquet de cigarettes (11).

5. Paquet de groupement selon la revendication 1 ou une des autres revendications, caractérisé par le fait que la boîte (21) détachée du groupement restant (22) correspond en largeur, profondeur et hauteur aux dimensions d'un seul paquet de cigarettes (11), plus précisément d'un paquet à sac souple, et au moins une patte rabat, à savoir une patte latérale (36), sert à la formation de la paroi latérale (26) de la boîte, des parties de la paroi avant (13) et de la paroi arrière (14) de l'enveloppe extérieure (12) formant respectivement une paroi avant (23) et une paroi arrière (24) de la boîte et une paroi frontale (18) de l'enveloppe extérieure (12) formant une paroi latérale (25) de la boîte.

6. Paquet de groupement selon la revendication 5, caractérisé par le fait que des paquets de cigarettes (11), plus précisément des paquets à sac souple, sont placés avec leur face d'ouverture (paroi supérieure 59) dans la zone d'une paroi latérale longue (supérieure) (15) de l'enveloppe extérieure (12), et qu'une partie de cette paroi latérale (15) forme une paroi supérieure de fermeture (28) de la boîte (21) à patte à insertion (29).

7. Paquet de groupement selon la revendication 5, caractérisé par le fait que des pattes latérales (36, 37) peuvent être détachées des parois du groupement restant (22) dans la zone de la paroi avant (13) et de la paroi arrière (14) et une patte de coin (35) peut en être détachée dans la zone d'une paroi latérale (16).

8. Paquet de groupement selon la revendication 7, caractérisé par le fait que la patte de coin (35) associée à une paroi de fond (27) de la boîte (21) est séparée de pattes latérales voisines (36, 37) par des coupes de découpage (55, 56), ces coupes de découpage (55, 56) pouvant de préférence être réalisées en même temps que la ligne de perforations (20).

9. Paquet de groupement selon la revendication 1 ou une des autres revendications, caractérisé par le fait qu'il est constitué de deux groupements partiels (44, 45) pouvant être séparés dans la zone d'une ligne de séparation (46), chaque groupement partiel (44, 45) présentant des zones séparées par des lignes de découpage et/ou de perforations (20) pour la formation avec chacune d'une boîte (21), de préférence dans des zones d'extrémité opposées de chaque groupement partiel (44, 45).
